# EUROPÄISCHE PATENTSCHRIFT

(11) **EP 2 762 988 B1**
(45) Veröffentlichungstag und Bekanntmachung des Hinweises auf die Patenterteilung: **19.06.2019**
(21) Anmeldenummer: 14151308.5
(22) Anmeldetag: 15.01.2014
(51) Int. Cl.: G05D 1/00

(54) **Bedarfsweise aktivierbares Fernsteuerungssystem und/oder Fernüberwachungssystem für Kraftfahrzeuge**
Demand-activated remote control and/or monitoring system for motor vehicles
Système de commande et/ou de surveillance à distance pour véhicule automobiles activable à la demande

(30) Priorität: 24.01.2013 DE 102013201168
(43) Veröffentlichungstag der Anmeldung: 06.08.2014
(73) Patentinhaber: Ford Global Technologies, LLC, Dearborn, MI 48126 (US)
(72) Erfinder: Stefan, Frederic, 52072 Aachen (DE); Gussen, Uwe, 52393 Hürtgenwald (DE); Arndt, Christoph, 57583 Mörlen (DE); Busch, Rainer, 52076 Aachen (DE)
(74) Vertreter: Dörfler, Thomas

(56) Entgegenhaltungen:
- WO-A1-2006/075533
- WO-A1-2011/116837
- US-A- 5 263 396
- GNATZIG S ET AL: "Human-machine interaction as key technology for driverless driving - A trajectory-based shared autonomy control approach", RO-MAN, 2012 IEEE, IEEE, 9. September 2012 (2012-09-09), Seiten 913-918, XP032466956, DOI: 10.1109/ROMAN.2012.6343867 ISBN: 978-1-4673-4604-7
- ALEXANDER FERWORN ET AL: "IP mobility issues for a mobile tele-robotic system-NEPWAK", INTERNATIONAL JOURNAL OF AUTOMATION AND COMPUTING, Bd. 1, Nr. 1, 22. Juli 2004 (2004-07-22), Seiten 10-16, XP055111984, ISSN: 1476-8186, DOI: 10.1007/s11633-004-0010-0

## Beschreibung

Die Erfindung betrifft ein bedarfsweise aktivierbares Fernsteuerungssystem und/oder Fernüberwachungssystem für Kraftfahrzeuge gemäß dem Oberbegriff des Patentanspruchs 1.

Es gibt häufig Situationen, in denen sich der Fahrer eines Kraftfahrzeugs wünscht, jemand würde die Steuerung des Kraftfahrzeugs übernehmen oder das Kraftfahrzeug würde automatisch fahren.

Nachfolgend werden einige Fälle beschrieben, in denen ein autonomes oder teilweise autonomes Fahren des Kraftfahrzeugs aus Bequemlichkeit oder aus praktischen Gründen wünschenswert wäre. Bei sehr langen Fahrstrecken müssen Fahrer Pausen machen und möglicherweise sogar unterwegs übernachten, typischerweise LKW-Fahrer, aber auch PKW-Fahrer auf dem Weg in den Urlaub. Unerfahrene und junge Fahrer können in bestimmten Verkehrssituationen oder auf ihrer ersten langen Fahrt gestresst oder sogar überfordert sein. Ältere Leute, durch Krankheiten beeinträchtigte Leute od. dgl. sind möglicherweise einem höheren Risiko ausgesetzt, während des Fahrens geistesabwesend zu werden, was die Unfallgefahr erhöht. Vorübergehend behinderte oder gehandicapte Leute sind möglicherweise auch vorübergehend unfähig, Kraftfahrzeuge zu führen. Mietwagen- oder Carsharing-Fahrer sind meist gezwungen, Fahrzeuge selbst abzuholen und später zurückzubringen, und zwar von Orten und an Orte weit vom Heimatort entfernt. Wenn Fahrer spät abends nach Hause kommen, finden sie manchmal nur weit weg von Zuhause einen freien Parkplatz. Während Nachtfahrten werden Fahrer möglicherweise müde, was schwere Unfälle verursachen kann. Ein Fahrer muss sich möglicherweise um ein Kind auf dem Rücksitz kümmern. Ein Fahrer könnte während der Fahrt einen allergischen oder epileptischen Anfall bekommen. Ein Fahrer könnte während der Fahrt einen wichtigen Telefonanruf bekommen, möchte aber nicht gegen das Telefonier-Verbot verstoßen.

In den meisten dieser Situationen müsste der Fahrer einen Stopp einlegen oder den Fahrersitz mit einem Beifahrer tauschen, was aus Sicherheits-, Zeit- oder Verfügbarkeitsgründen aber nicht immer möglich ist. Im Stand der Technik wurden viele Systeme vorgeschlagen, die Fahrern in solchen Situationen helfen. Derartige Systeme können einfach den Fahrer anweisen, jetzt eine Pause einzulegen, oder teilweise die Kontrolle über das Fahrzeug übernehmen (z.B. Abstandsregeltempomat in Verbindung mit Spurhalteautomat), oder ganz die Kontrolle über das Fahrzeug übernehmen (nach Art eines Autopiloten).

Rechnergestützt autonom fahrende Fahrzeuge leiden jedoch noch an immensen technischen Herausforderungen und verkehrsrechtlichen Problemen, und es ist auch nicht absehbar, wann Kraftfahrzeug-Autopiloten im Stande sein werden, mit einer großen Spanne von Fahrsituationen und unerwarteten Situationen fertig zu werden, wie es menschliche Wesen können. Außerdem werden Kraftfahrzeug-Autopiloten wahrscheinlich nicht ohne Fahrzeug-zu-Fahrzeug-Kommunikation und eine entsprechende Infrastruktur auskommen, die ebenfalls noch lange nicht überall verfügbar sein wird.

Die DE 101 54 400 C2 offenbart ein gattungsgemäßes Fernsteuerungssystem für Kraftfahrzeuge, nämlich ein Überwachungs- und Steuerungssystem für bemannte Fahrzeuge, insbesondere für Flugzeuge, die in Notfällen von einer Bodenstation aus ferngesteuert werden können. Einmal aktiviert, kann die Fernsteuerung nur noch unter besonderen Voraussetzungen wieder deaktiviert werden.

Die EP 0 419 897 A2 offenbart ein Fernsteuerungssystem für Kampffahrzeuge, das wahlweise deaktivierbar ist, um die Steuerung an die Besatzung des Kampffahrzeugs zu übergeben.

Die WO 2011/116837 A1 offenbart ein System zur bedarfsweisen Fernsteuerung eines Fahrzeuges, insbesondere eines Schienenfahrzeuges, mittels einer speziell ausgebildeten Fernsteuerzentrale.

GNATZIG S ET AL: "Human-machine interaction as key technology for driverless driving - A trajectory-based shared autonomy control approach", RO-MAN, 2012 IEEE, Seiten 913-918, diskutiert ein Konzept zur Fernsteuerung eines Fahrzeuges unter Einbeziehung der Fahrerkontrolle unter besonderer Berücksichtigung der Latenzzeitproblematik.

In ALEXANDER FERWORN ET AL: "IP mobility issues for a mobile tele-robotic system-NEPWAK", INTERNATIONAL JOURNAL OF AUTOMATION AND COMPU-TING, Bd. 1, Nr. 1, wird die Fernsteuerung eines elektrisch angetriebenen Rollstuhls über Internet unter Berücksichtigung von Netzübergabe-Latenzproblemen diskutiert.

Die WO 2006/075533 A1 offenbart ein Fernsteuerungsverfahren zum Fernsteuern des Betriebs von Fahrzeugausrüstung in Reaktion auf eine von einer Fernsteuerung erzeugte Fernsteueranforderung. Das Verfahren umfasst das Erfassen von Fahrzeugstatusinformationen, das Bestimmen, ob eine bestimmte Fahrzeugausrüstung betrieben werden soll, und das Regeln der Fernsteuerungsanforderung basierend auf dem Bestimmungsergebnis, das die Akzeptanz des Fernsteuerungsbetriebs der angeforderten Fahrzeugausrüstung repräsentiert. Dabei wird der Bestimmungsprozess zwischen der Fernsteuerung und dem Fahrzeug aufgeteilt.

Die im Stand der Technik bekannten bedarfsweise aktivierbaren Fernsteuerungssysteme für Fahrzeuge sind viel zu aufwändig, um für Kraftfahrzeuge in Frage zu kommen, weil eine stationäre Einrichtung zu deren Fernsteuerung stets immense Kapazitäten an Hard- und Software sowie an Personal bereithalten müsste.

Der Erfindung liegt die Aufgabe zu Grunde, ein bedarfsweise aktivierbares Fernsteuerungssystem für Kraftfahrzeuge bereitzustellen, das mit wenig Aufwand realisierbar und betreibbar ist, so dass es auch mit einer vergleichsweise geringen Zahl von Kunden rentabel arbeiten kann, und das leicht mit einer zunehmenden Zahl von Kunden Schritt halten kann.

Diese Aufgabe wird durch ein bedarfsweise aktivierbares Fernsteuerungssystem und/oder Fernüberwachungssystem mit den Merkmalen des Patentanspruchs 1 gelöst. Vorteilhafte Weiterbildungen der Erfindung sind in den abhängigen Patentansprüchen angegeben.

Gemäß der Erfindung vermittelt die Zentrale Anforderungen von Fernüberwachung und/oder Fernsteuerung eines Kraftfahrzeugs und Angebote zur Durchführung der Fernsteuerung des Kraftfahrzeugs von Operator-Personen an fern von der Zentrale befindlichen persönlichen Datenendgeräten. Nach Annahme eines Angebots richtet die Zentrale eine Datenkommunikationsverbindung zwischen dem Kraftfahrzeug und dem persönlichen Datenendgerät ein, von dem das Angebot stammt. D.h., die Zentrale ist für die Koordination und Kommunikation zwischen fernüberwachten bzw. ferngesteuerten Kraftfahrzeugen, den Fahrern dieser Kraftfahrzeuge sowie Personen oder Fahragent-Programmen als Operatoren zuständig.

Jedes gemäß der Erfindung eingerichtete persönliche Datenendgerät ermöglicht es der daran tätigen Operator-Person, die Fernüberwachung und/oder Fernsteuerung des Kraftfahrzeugs über die von der Zentrale eingerichtete Datenkommunikationsverbindung nach Art von Fahrsimulations-Computerspielen durchzuführen, d.h. mit einer Bildschirmansicht des Kraftfahrzeug-Armaturenbretts mit den wichtigsten Instrumenten, welche Ansicht auch grafisch simuliert sein kann, und mit einer Bildschirmansicht der realen Szenerie in Fahrtrichtung und in den Rückspiegeln, sowie mit Steuermöglichkeiten über Video- und/oder Audioschnittstellen des Datenendgeräts, wobei jedoch die Steuerbefehle nicht ein virtuelles Kraftfahrzeug, sondern das reale Kraftfahrzeug steuern.

Die Fernüberwachung und/oder Fernsteuerung nach Art von Fahrsimulations-Computerspielen von entfernten persönlichen Datenendgeräten aus ermöglicht es, ohne erheblichen Aufwand Personen zu gewinnen, sich als Operator-Personen oder virtuelle Taxifahrer anzubieten, wobei natürlich gewisse Voraussetzungen hinsichtlich Fahrlizenz, Ortskenntnissen, Fahrpraxis bzw. des verwendeten Fernsteuerprogramms bzw. Fahrsimulations-Computerspiels verlangt werden können. Der Aufwand zur Realisierung der Erfindung beschränkt sich im Wesentlichen auf die Bereitstellung der Zentrale sowie der Software für die Kraftfahrzeuge und persönlichen Datenendgeräte. Dieser Service kann auch als bezahlte Dienstleistung von Firmen oder einzelnen Personen erbracht werden.

Eine Anforderung von Fernüberwachung kann darin bestehen, zunächst nur den Betrieb des Kraftfahrzeugs und/oder des Fahrers zu überwachen, insbesondere für die Dauer einer besonderen Situation oder eines Problems, und im Falle, dass eine Unfähigkeit des Fahrers erkannt wird, das Fahrzeug sicher zu fahren, das Kraftfahrzeug fernzusteuern, z.B. bis zum sicheren Stillstand oder bis an ein vorgegebenes Ziel oder in ein Krankenhaus.

Eine Anforderung von Fernsteuerung kann z.B. beinhalten, das Kraftfahrzeug für eine gewisse Zeit oder Fahrstrecke fernzusteuern, während der sich der Fahrer mit etwas anderem als Fahren beschäftigen möchte, oder das Kraftfahrzeug an ein Ziel fernzusteuern, nachdem es der Fahrer verlassen hat.

In einer bevorzugten Ausführungsform verfügt jedes Kraftfahrzeug über Drive-by-Wire-Steuerungen, die eine Fernsteuerung des Kraftfahrzeugs mittels elektrischer Signale ermöglichen, und eine Datenverarbeitungseinrichtung, in dem eine von der Zentrale bereitgestellte oder autorisierte Software zur Übermittlung von Anforderungen von Fernüberwachung und/oder Fernsteuerung an die Zentrale und zur Durchführung der Fernsteuerung von einem entfernten persönlichen Datenendgerät aus installiert ist.

Vorzugsweise ist jedes persönliche Datenendgerät, das normalerweise auch ein privates Gerät sein wird, ein Allzweck-Computer für Endverbraucher, insbesondere ein PC mit Bildschirm und Eingabegeräten, auf dem eine von der Zentrale bereitgestellte oder autorisierte Software zum Empfang von Anforderungen von Fernüberwachung und/oder Fernsteuerung von der Zentrale, zur Übermittlung von Angeboten zur Fernüberwachung und/oder Fernsteuerung an die Zentrale, und zur Durchführung der Fernsteuerung über die bereitgestellte Datenkommunikationsverbindung installiert ist.

Die Anforderungen an die Fernsteuerpräzision sind bei dem erfindungsgemäßen System relativ gering, viel geringer als bei einem Flugzeug. In einer besonders einfachen Systemversion kann es ausreichen, das Kraftfahrzeug aus der Ferne lenken und bremsen zu können, um es sicher zum Stillstand bringen zu können. In einer wenig aufwändigeren Version können noch Gasgeben und ggf. Gangschalten hinzukommen, um das Kraftfahrzeug aus der Ferne zu einem Ziel leiten zu können. D.h., wesentlich ist die Fernsteuerbarkeit von Longitudinal- und Lateralgeschwindigkeiten und -beschleunigungen.

Die Fernüberwachung und/oder Fernsteuerung kann außer von Operator-Personen wahlweise auch von Fahragent-Programmen durchgeführt werden, d.h. virtuellen Fahrern oder Offboard-Autopiloten, von denen vorzugsweise jeweils mehrere für Kraftfahrzeuge in einem bestimmten geografischen Gebiet zuständig sind. Da diese virtuellen Fahrer leicht Informationen über die beobachteten Situationen miteinander austauschen und voneinander lernen können, entstehen Synergien. Wenn das Kraftfahrzeug in ein anderes geografisches Gebiet gelangt, wird die Fernüberwachung und/oder Fernsteuerung automatisch an einen anderen, dafür zuständigen virtuellen Fahrer übergeben.

Vorzugsweise umfasst das Fernsteuerungssystem ein Bezahlsystem für automatische Abwicklung der Zahlung von Dienstnutzung und einer leistungsgerechten Entlohnung von Operator-Personen. Nutzer können die Möglichkeit haben, Operator-Personen nach Kriterien wie persönlicher Bekanntschaft, Alter, Erfahrung, Preis usw. auszuwählen.

Es ist vorgesehen, dass eine Anforderung von Fernüberwachung und/oder Fernsteuerung normalerweise vom Fahrer oder dessen Kraftfahrzeug selbst ausgeht. In einer Weiterbildung der Erfindung kann aber auch vorgesehen sein, dass jemand anderes, z.B. ein Erziehungsberechtigter des Fahrers, eine Fernüberwachung und/oder Fernsteuerung anfordern und diese dann selbst durchführen kann. Dies ist einer der wenigen denkbaren Fälle, in denen der Fahrer nicht selbst wieder die Kontrolle über sein Fahrzeug übernehmen kann, sobald er es wünscht, was ihm ansonsten stets möglich ist.

Das erfindungsgemäße Fernsteuerungssystem kann auch eine im Kraftfahrzeug installierte Einrichtung zur automatischen Überwachung und Bewertung der gesundheitlichen oder emotionalen Verfassung des Fahrers umfassen, welche nötigenfalls von sich aus eine Anforderung von Fernsteuerung des Kraftfahrzeugs an die Zentrale sendet.

Das erfindungsgemäße Fernsteuerungssystem kann auch eine Einrichtung zur automatischen Bewertung der fahrtechnischen Leistung von Operator-Personen umfassen, welche Leistung auch bei der Entlohnung der jeweiligen Operator-Person Berücksichtigung finden kann. Außerdem kann die emotionale und gesundheitliche Verfassung von Operator-Personen überwacht werden, um sicherzustellen, dass nur aufmerksame und gesunde Operator-Personen tätig sind.

Bevorzugt wird ein Auswahlprozeß von Operator-Personen aufgrund von Kriterien durchgeführt, wobei die Kriterien die Übereinstimmungen mit dem Fahrer wie Bekanntschaften, Fahrstil und/oder persönliche Einstellungen; und/oder eine Vorauswahl des Fahrers, insbesondere aufgrund von Namenslisten, Anforderungsprofil des Operators und/oder Mindestanforderungen an den Operator betreffen können. Damit kann der Fahrer schon vorab eine Auswahl von für ihn geeignet erscheinenden Operatoren treffen, bzw. bei der Auswahl aufgrund von Namenslisten, auch genau angeben, wer das Fahrzeug übernehmen soll.

Die Nutzung des erfindungsgemäßen Fernsteuerungssystems kann unter Umständen auf bestimmte Orte beschränkt sein, z.B. bestimmte geografische Gebiete, für die genügend Operatoren zur Verfügung stehen, oder auf kreuzungsfreie Straßen, für die eine Fernsteuerung am sichersten zu bewältigen sein dürfte.

Die Datenkommunikationsverbindung zwischen dem Kraftfahrzeug und dem persönlichen Datenendgerät muss aus Sicherheitsgründen sehr zuverlässig sein, was durch redundante und insbesondere parallele Funkverbindungen erreicht werden kann.

Das erfindungsgemäße Fernsteuerungssystem ist geeignet, die Verbreitung und Akzeptanz von vollautonomem Fahren zu fördern, weil Fahrer erst einmal die Erfahrung machen und sich daran gewöhnen können, zumindest phasenweise die Kontrolle über Ihr Fahrzeug abzugeben.

Die Erfindung kann zur Unterstützung von vielen Arten von Kraftfahrzeugen verwendet werden, z.B. Lastkraftwagen, Busse und Personenwagen. Die Erfindung ermöglicht Fernunterstützung von Fahranfängern, Senioren, durch Krankheit oder Behinderung beeinträchtigten Personen und vorübergehend gehandicapten Personen, indem ein Operator die Fahrt überwachen und nötigenfalls korrigierend eingreifen oder die Steuerung ganz übernehmen kann. Auch kann die Fahrt von jugendlichen Fahranfängern von einem Elternteil überwacht werden, das die Kontrolle über das Fahrzeug übernehmen kann, wenn er annimmt, dass das Kind unter Einfluss von Alkohol steht. Die Erfindung bietet auch einen Bedarfs-Chauffeurdienst für viele Situationen, in denen der Fahrer pausieren oder seine Aufmerksamkeit auf irgendetwas anders richten möchte, und auch für kritische Manöver. Die Erfindung ermöglicht es auch, Mietwagen u. dgl. abholen oder zurückbringen zu lassen.

Es folgt eine Beschreibung von Ausführungsbeispielen anhand der Zeichnungen. Es zeigen:
- Fig. 1: ein schematisches Blockdiagramm eines bedarfsweise aktivierbaren Fernsteuerungssystems für Kraftfahrzeuge;
- Fig. 2: ein schematisches Blockdiagramm eines bedarfsweise aktivierbaren Fernsteuerungssystems für Kraftfahrzeuge, das jenem von Fig. 1 ähnlich ist, wobei aber einige Blöcke weggelassen bzw. hinzugefügt bzw. weiter unterteilt sind, um die Fernsteuerfunktionen und deren Schnittstelle detaillierter zu veranschaulichen;
- Fig. 3: ein schematisches Blockdiagramm zur weiteren Veranschaulichung der Fahrtüchtigkeitsüberwachung und der Ermittlung von Fahrerpräferenzen;
- Fig. 4: ein Flussdiagramm zur Erläuterung eines Beispiels für einen Prozess zum Anfordern von Fernüberwachung bzw. Fernsteuerung eines Kraftfahrzeug und zum Auswählen eines Operators;
- Fig. 5: ein Flussdiagramm zur Erläuterung eines Beispiels für einen Prozess zur Übergabe der Fahrzeugsteuerung an einen ausgewählten Operator und zur Beendigung von ferngesteuertem Fahren; und
- Fig. 6: ein Flussdiagramm zur Erläuterung eines Beispiels für einen Prozess zur Bewertung von Operator-Personen und zur Abrechnung von Fernsteuerungsdiensten.

In den verschiedenen Figuren sind gleiche oder einander ähnliche Elemente mit gleichen Bezugszeichen bezeichnet.

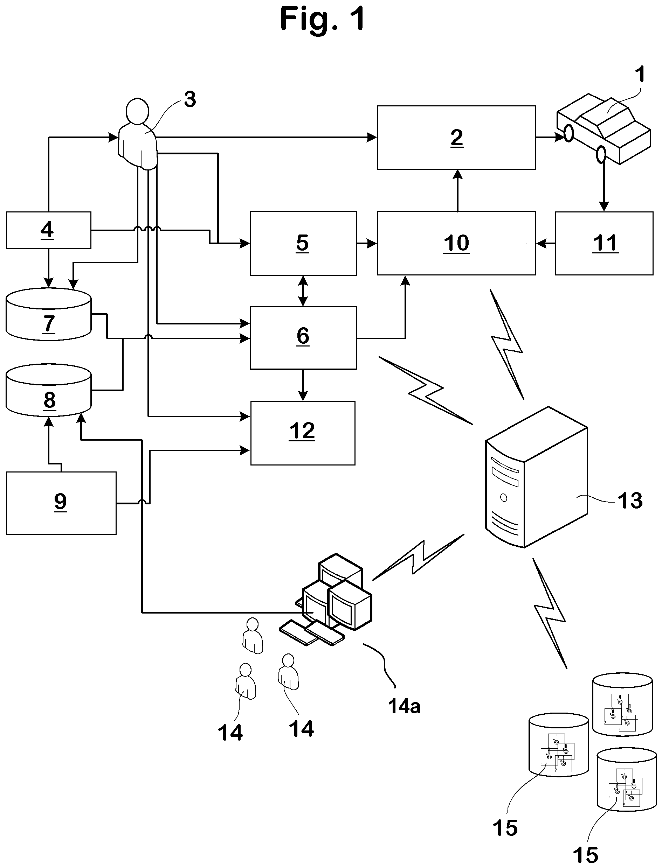

In Fig. 1 enthält ein Kraftfahrzeug 1 eine Fahrer-Fahrzeug-Schnittstelle 2, welche es einem Fahrer 3 des Kraftfahrzeugs 1 erlaubt, das Kraftfahrzeug 1 zu steuern. Die Fahrer-Fahrzeug-Schnittstelle 2 umfasst insbesondere ein Lenkrad, Pedale und einen Gangwähler und liefert den Stellungen der Bedienelemente entsprechende elektrische Signale zur Ansteuerung von Servomotoren oder elektromechanischen Aktuatoren, welche das Kraftfahrzeug 1 auf Lenk-, Brems- und Vortriebsbefehle des Fahrers 3 reagieren lassen. Das heißt, das Kraftfahrzeug verfügt über eine sog. Drive-by-Wire-Steuerung, welche rein elektrisch sein kann, aber auch aus Sicherheitsgründen parallel wirkende mechanische oder hydraulische Steuerelemente aufweisen kann.

Zu der Fahrer-Fahrzeug-Schnittstelle 2 können weitere Bedienelemente gehören, z.B. für eine Klimaanlage, Scheibenheizung, Fahrerassistenzsysteme usw. Die Fahrer-Fahrzeug-Schnittstelle 2 umfasst auch eine Mensch-Maschine-Schnittstelle wie z.B. einen Bildschirm, ein Sprachkommunikationsmodul u. dgl.

Ein Fahrtüchtigkeits-Bewertungsmodul 4 ist dafür eingerichtet, die gesundheitliche oder emotionale Verfassung des Fahrers 3 zu bewerten, z.B. unter den Aspekten Krankheit, Müdigkeit, Abgelenktheit, Aggressivität, Stress, Panik usw. In der Technik sind verschiedene Systeme zur automatischen Bewertung der gesundheitlichen oder emotionalen Verfassung des Fahrers eines Kraftfahrzeugs bekannt, z.B. anhand von Stimmanalyse, Atemgeräuschanalyse, Herzfrequenzanalyse, Atemgasanalyse, Augenbewegungsanalyse, Analyse von Daten über den gegenwärtigen Fahrzustand des Kraftfahrzeugs in Verbindung mit gerade geltenden Verkehrsregeln, usw.

Wenn das Fahrtüchtigkeits-Bewertungsmodul 4 eine die Fahrtüchtigkeit erheblich beeinträchtigende gesundheitliche oder emotionale Verfassung des Fahrers 3 feststellt, sendet es von sich aus einen Befehl zur Fernüberwachung oder Fernsteuerung des Kraftfahrzeugs 1 an ein Steuerungsübergabe-Anforderungsmodul 5.

Ein derartiger Befehl kann z.B. darin bestehen, eine Fernüberwachung des Betriebs des Kraftfahrzeugs 1 und/oder des Fahrers 3 anzufordern und in kritischen Fällen oder Notfällen, in denen eine entsprechende Hilfsbedürftigkeit des Fahrers 3 festgestellt wird, auch eine Fernsteuerung des Kraftfahrzeugs 1 anzufordern bzw. zuzulassen, wenn deren Notwendigkeit aufgrund der Fernüberwachung festgestellt wird oder wenn der Fahrer 3 eine Fernsteuerung wünscht.

Eine Fernüberwachung oder Fernsteuerung des Kraftfahrzeugs 1 kann durch eine Person oder durch Software stattfinden, die sich an einem beliebigen anderen Ort als das Kraftfahrzeug 1 befindet, und soweit sie durch Personen stattfindet, kann sie auf bestimmte Personen beschränkt werden, z.B. auf Personen mit geeigneter Ausbildung und Zulassung oder auf die Eltern eines jugendlichen Fahranfängers, bei dem das Fahrtüchtigkeits-Bewertungsmodul 4 eine aggressive Fahrweise, Nichteinhaltung von Verkehrsregeln und/oder Alkoholgenuss festgestellt hat. Nach entsprechender Benachrichtigung können die Eltern z.B. über einen entsprechend eingerichteten Computer 14a die Steuerung des Kraftfahrzeugs 1 übernehmen und ihr Kind sicher nach Hause zu bringen.

Einen Befehl zur Fernüberwachung oder Fernsteuerung des Kraftfahrzeugs 1 kann der Fahrer 3 dem Steuerungsübergabe-Anforderungsmodul 5 auch direkt geben, indem er einen entsprechenden Knopf oder eine entsprechende Schaltfläche auf einem Bildschirm betätigt, z.B. weil er sich um ein Kind auf der Rückbank des Kraftfahrzeugs 1 kümmern muss, weil er einen heruntergefallenen Gegenstand im Kraftfahrzeug 1 aufheben möchte oder weil er sich eine Zeit lang ausruhen möchte, ohne die Fahrt unterbrechen zu müssen.

Die Person oder die Software, die das Kraftfahrzeug 1 fernüberwachen bzw. fernsteuern soll, wird hier der Kürze halber Operator genannt. Für die Auswahl des Operators arbeitet das Steuerungsübergabe-Anforderungsmodul 5 mit einem Operatorauswahlmodul 6 zusammen, das die Auswahl des Operators anhand von Kriterien trifft, zu denen die gewünschte Dauer der Fernüberwachung bzw. -steuerung, die Verfügbarkeit des Operators, Präferenzen des Fahrers 3, die in einem Fahrerpräferenzenspeicher 7 gespeichert sind, die vom Fahrtüchtigkeits-Bewertungsmodul 4 festgestellte gesundheitliche oder emotionale Verfassung des Fahrers 3, eine Direktauswahl durch den Fahrer 3, irgendwelche voreingestellten Kriterien für den Fall, dass der Fahrer nicht in der Lage ist, eine Entscheidung zu treffen, und die Historie von früher gewählten Operatoren und deren Leistung gehören.

Aus dem Fahrerpräferenzenspeicher 7 kann das Operatorauswahlmodul 6 folgende Daten abrufen: vom Fahrer 3 vorgenommene Voreinstellungen bezüglich eines bestimmten Personenkreises, aus dem ein Operator ausgewählt werden kann, z.B. dem Fahrer persönlich bekannte Personen wie z.B. Familienmitglieder; vom Fahrer 3 vorgenommene Voreinstellungen bezüglich Mindestqualifikationen von auswählbaren Operatoren, z.B. eine Mindestzahl von Stunden, die der Operator schon fernüberwachend bzw. fernsteuernd tätig gewesen ist; sowie Zuordnungen, welcher oder was für ein Operator unter welchen Umständen (z.B. gesundheitliche oder emotionale Beeinträchtigung des Fahrers) auszuwählen ist, wobei es derartige Zuordnungen auch für verschiedene Fahrer 3 geben kann, wenn es mehrere zum Führen des Kraftfahrzeugs 1 befugte Fahrer 3 gibt.

Die Historien von früher gewählten Operatoren und deren Leistung sind in einem Operatorhistoriespeicher 8 aufgezeichnet. Der Operatorhistoriespeicher 8 empfängt Daten von einem Operatorbewertungsmodul 9, das zu jedem früher ausgewählten Operator Kriterien ermittelt hat wie z.B. Ökonomie des Fahrstils, Sanftheit des Fahrstils, Einhaltung von Verkehrsregeln, Übereinstimmung des Fahrstils des Operators mit dem vom Fahrer 3 bevorzugten Fahrstil (eher passiv oder eher dynamisch, eher sicherheitsbewusst oder eher zielorientiert) sowie den Grad der Aufmerksamkeit, die der Operator seiner Aufgabe gewidmet hat.

Der Befehl zur Fernüberwachung oder Fernsteuerung des Kraftfahrzeugs 1 vom Steuerungsübergabe-Anforderungsmodul 5 und die vom Operatorauswahlmodul 6 getroffene Auswahl des Operators werden einer Schnittstelle 10 für Fernüberwachung und -steuerung zugeführt, welche außerdem von einem Fahrzeugzustandsmodul 11 Zustandsdaten empfängt, welche den Betriebszustand und den Umgebungszustand des Kraftfahrzeugs 1 repräsentieren, insbesondere ein Kamerabild der Straße vor dem Kraftfahrzeug 1, die aktuelle Geschwindigkeit des Kraftfahrzeugs 1 sowie weitere Daten wie z.B. die momentanen Stellungen von Bedienelementen des Kraftfahrzeugs 1.

Zusätzlich zu den vorstehend beschriebenen Schnittstellen, Modulen und Speichern befindet sich im Kraftfahrzeug 1 ein Abrechnungsmodul 12, um das beschriebene Fernüberwachungs- und -steuerungssystem als einen bedarfsweise gegen Gebühr nutzbaren Dienst zu gestalten. Die Bereitstellung der nachfolgend beschriebenen, fern von dem Kraftfahrzeug 1 befindlichen Hard- und Software sowie die Tätigkeit von Operator-Personen wird in diesem Fall von Fahrern 3 bezahlt, die den Dienst in Anspruch nehmen, wenn und nur solange sie ihn nutzen. Die Preise können z.B. nach Umfang und Qualität der angeforderten Fernüberwachung bzw. -steuerung gestaffelte Kilometer- und/oder Minutenpreise sein. Wenn Operator-Personen einen Prozentsatz davon erhalten, haben sie ein gutes Motiv, ihre Arbeit gut zu machen, was Fahrern 3 zusätzliche Sicherheit gibt. Natürlich kann auch die Möglichkeit vorgesehen sein, ein Dienstpaket im Voraus zu bezahlen oder zur Probe geschenkt zu bekommen, in welchem Fall das Abrechnungsmodul 12 das Guthaben herunterzählt, während der Dienst in Anspruch genommen wird.

Fern von dem Kraftfahrzeug 1 befinden sich eine zentrale Koordinationseinheit 13, die über Funk mit dem Kraftfahrzeug 2 in Datenkommunikation steht, insbesondere mit dem Operatorauswahlmodul 6, der Schnittstelle 10 für Fernüberwachung und -steuerung und dem Abrechnungsmodul 12. Die zentrale Koordinationseinheit 13 ist z.B. ein Server, der z.B. über mobiles Internet bzw. Mobilfunk mit dem Kraftfahrzeug 1 und außerdem per Kabel oder Funk mit Operatoren kommuniziert, welche entweder Personen 14 an irgendwelchen Computern 14a oder Fahragent-Programme 15 in irgendwelchen Computern sein können.

Wenn die zentrale Koordinationseinheit 13 eine Anforderung zur Fernüberwachung oder Fernsteuerung des Kraftfahrzeugs 1 empfängt, startet sie einen Vorauswahl-Prozess und nennt dem Operatorauswahlmodul 6 die zur Verfügung stehenden Operatoren. Nach endgültiger Auswahl des Operators durch das Operatorauswahlmodul 6 und/oder den Fahrer wird der Operator aufgefordert, koordiniert durch die zentrale Koordinationseinheit 13 die Fernüberwachung oder Fernsteuerung des Kraftfahrzeugs 1 über dessen Schnittstelle 10 für Fernüberwachung und -steuerung durchzuführen.

Personen 14 als Operatoren können sich an einem beliebigen Ort befinden, wo sie mittels eines geeigneten Endgeräts wie z.B. eines Computers 14a, auf dem eine geeignete Software läuft, die Fernüberwachung oder Fernsteuerung des Kraftfahrzeugs 1 durchführen können. Diese Software kann ein ähnliches Erscheinungsbild, d.h. eine Bildschirmansicht des Kraftfahrzeug-Armaturenbretts und der Szenerie in Fahrtrichtung und in den Rückspiegeln, sowie Steuermöglichkeiten über Video- und/oder Audioschnittstellen wie Fahrsimulations-Computerspiele haben, um eine Fernüberwachung oder Fernsteuerung des Kraftfahrzeugs 1 zu ermöglichen. Eine besonders leichte Bedienbarkeit und besonders realistische Fernsteuerung des Kraftfahrzeugs 1 wird möglich, wenn das Endgerät auch spezielle Hardware aufweist, welche Bedienelemente eines Kraftfahrzeugs realitätsnah nachbildet, wie ebenfalls für Fahrsimulations-Computerspiele bzw. Kraftfahrzeug-Videospiele bekannt.

Es kann vorgesehen sein, dass sich grundsätzlich jedermann als Operator bewerben kann, insbesondere als freier Mitarbeiter auf Honorarbasis, doch kann es Einschränkungen dahingehend geben, dass nur Personen mit bestimmten Voraussetzungen hinsichtlich Fahrlizenz und Erfahrung für Fernüberwachung bzw. Fernsteuerung dafür zugelassen werden, und/oder es kann verlangt werden, dass Bewerber eine spezielle Ausbildung insbesondere für die Fernsteuerung von Kraftfahrzeugen bzw. bestimmten Kraftfahrzeugtypen erfolgreich absolvieren. Operator-Personen 14 sind somit eine Art virtuelle Taxifahrer.

Über die zentrale Koordinationseinheit 13 kann der Operatorhistoriespeicher 8 Informationen über eine Operator-Person 14 empfangen, wie mit einem Pfeil schematisch angezeigt.

Anstatt einer Person 14 als Operator kann auch eines der Fahragent-Programme 15 dafür ausgewählt werden, die Fahrt des Kraftfahrzeugs 1 und/oder den Fahrer 3 aus der Ferne zu überwachen oder zu steuern. Ein derartiges Fahragent-Programm 15 ist eine Art Autopilot, der sich aber nicht in dem zu steuernden Kraftfahrzeug befindet, wie gegenwärtige Systeme für autonomes Fahren, sondern auf einem oder mehreren entfernten Servern.

Es wird vorgeschlagen, dass jedes Fahragent-Programm 15 oder jeweils eine Gruppe von Fahragent-Programmen 15 nur für ein bestimmtes geografisches Gebiet und/oder für bestimmte Kraftfahrzeugtypen zuständig ist. Wenn ein unter Kontrolle eines Fahragent-Programms 15 fahrendes Kraftfahrzeug 1 das diesem Programm zugeordnete geografische Gebiet verlässt, übernimmt ein anderes, für das neue Gebiet zuständige Fahragent-Programm 15 die Kontrolle. Wenn für ein bestimmtes geografisches Gebiet mehrere Fahragent-Programme 15 zuständig sind, die jeweils ein anderes fahrendes Kraftfahrzeug unter Kontrolle haben, können Fahragent-Programme 15 Informationen miteinander austauschen, ohne direkte Fahrzeug-Fahrzeug-Kommunikation zu benötigen. Fahragent-Programme 15 können mit Lernalgorithmen versehen sein, die ihre Leistungsfähigkeit mit zunehmender Einsatzzeit verbessern.

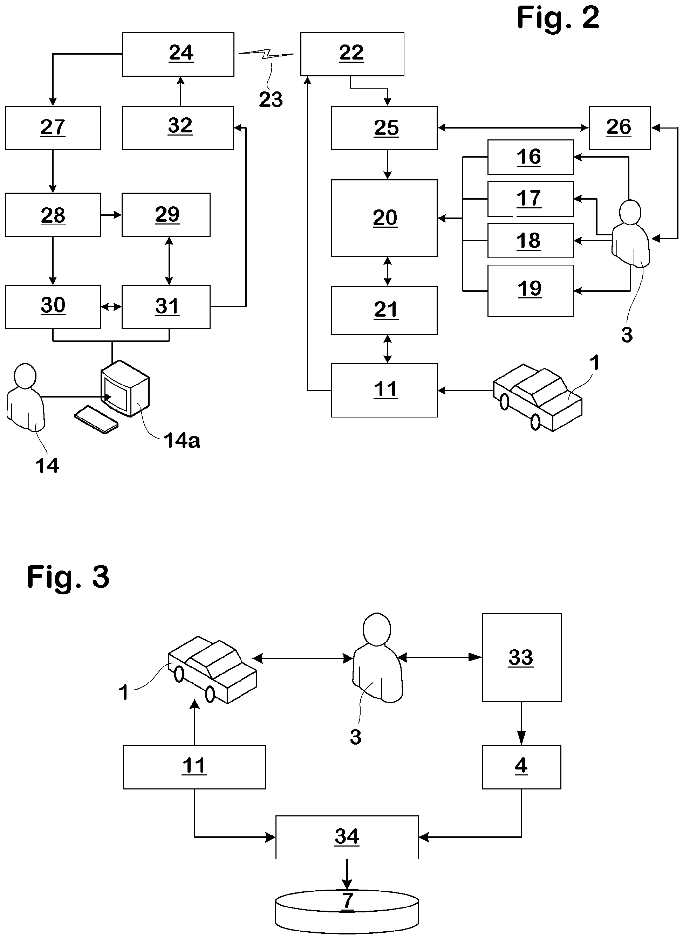

In Fig. 2 enthält das Kraftfahrzeug 1 als die Fahrer-Fahrzeug-Schnittstelle 2 von Fig. 1 ein Lenkrad 16, Pedale 17, einen Gangwähler 18 und weitere Bedienelemente 19 wie z.B. für Fahrzeugbeleuchtung, Klimaanlage, Scheibenheizung, Fahrerassistenzsysteme wie z.B. Abstandsregeltempomat, usw., die elektrische Signale liefern, die nach Anpassung an die vorhandenen Fahrzeugsteuerelemente in einem Befehlsarbitrierungsmodul 20 einem Fahrzeugsteuermodul 21 für Servomotoren oder elektromechanische Aktuatoren zugeführt werden, welche das Kraftfahrzeug 1 wie gewünscht auf die Lenk-, Brems-, Vortriebs- und sonstigen Befehle des Fahrers 3 reagieren lassen.

Das Fahrzeugsteuermodul 21 sendet an das Fahrzeugzustandsmodul 11 Zustandsdaten, welche den Soll-Betriebszustand des Kraftfahrzeugs 1 repräsentieren, insbesondere die momentanen Betriebsanforderungen mittels der Bedienelemente 16-19, und empfängt vom Fahrzeugzustandsmodul 11 Zustandsdaten, welche den Ist-Betriebszustand des Kraftfahrzeugs 1 repräsentieren, insbesondere dessen Longitudinal- und Lateralgeschwindigkeiten und -beschleunigungen, Motordrehzahl, aktuelle Reichweite (Kraftstoff- bzw. Batteriefüllmenge), Einschaltzustand der Beleuchtung, usw.

Das Fahrzeugsteuermodul 21 erfasst weitere Zustandsdaten wie z.B. Kamerabilder der Straße in erster Line vor, ggf. aber auch neben und hinter dem Kraftfahrzeug 1, in den Kamerabildern detektierte Relativpositionen von anderen Verkehrsteilnehmern, Fahrzeug-zu-Fahrzeug-Informationen und Wetterbedingungen in der Fahrzeugumgebung und sendet diese zusammen mit den Zustandsdaten, welche den Ist-Betriebszustand des Kraftfahrzeugs 1 repräsentieren, über ein Fahrzeug-Funkkommunikationsmodul 22 per Funkkommunikation 23 an ein Funkkommunikationsmodul 24 der zentralen Koordinationseinheit 13 von Fig. 1. Die Funkkommunikation 23 ermöglicht Kommunikation zwischen dem Fahrer 3, dem Kraftfahrzeug 1 und einer Operator-Person 14 bzw. deren Computer 14a. Die Funkkommunikation 23 muss zuverlässig und schnell genug sein, um kontinuierliche Fernüberwachung bzw. Fernsteuerung sicherzustellen.

Das Fahrzeug-Funkkommunikationsmodul 22 und ein Fernsteuerbefehlsdecodierer 25 bilden die in Fig. 1 gezeigte Schnittstelle 10 für Fernüberwachung und -steuerung. Ein Fernsteuerbefehlsdecodierer 25 kann über die Funkkommunikationsmodule 22 und 24 Fahrbefehle von einer Operator-Person 14 empfangen und dem Befehlsarbitrierungsmodul 20 zuführen.

Eine Mensch-Maschine-Schnittstelle 26 wie z.B. ein Touchscreen, ein Sprachkommunikationsmodul u. dgl. ermöglicht es dem Fahrer 3, eine Fahrzeugfernüberwachung bzw. -steuerung durch eine Operator-Person 14 zu aktivieren, eine Operator-Person 14 auszuwählen, eine Abrechnung von erbrachten Leistungen zu bestätigen und die Fahrzeugfernüberwachung bzw. -steuerung zu beenden.

Mit Ausnahme des Funkkommunikationsmoduls 24 befinden sich die vorgenannten Blöcke von Fig. 2 im Kraftfahrzeug 1 bzw. in einem Bordrechner desselben.

Auf der Operatorseite, d.h. in oder an einem PC oder ähnlichen Computer 14a einer als Operator tätigen Person 14, gibt es ein Zustandsextraktionsmodul 27, in dem die Zustandsdaten, d. h. die Soll- und Ist-Betriebszustände des Kraftfahrzeugs 1, aus den vom Funkkommunikationsmodul 24 empfangenen Signalen gewonnen werden. Die Zustandsdaten werden in einem Fahrzeugzustand-Präparationsmodul 28 in einer Weise aufbereitet, die eine für die Operator-Person 14 geeignete bzw. optimale Darstellung erlaubt, und werden dann auch einem Haptikemulationsmodul 29 und einem Fahrzeugfahrsimulatormodul 30 zugeführt.

Das Haptikemulationsmodul 29 ist optional und ist nur erforderlich bzw. nur aktiv, wenn eine von Zuhause arbeitende Operator-Person 14 einen fortgeschrittenen Fahrsimulator mit Lenkrad- und Pedalhardware besitzt, welche z.B. Lenkwiderstände, Pedaldrücke, Fahrzeugbeschleunigungen usw. emulieren kann.

Das Fahrzeugfahrsimulatormodul 30 enthält ein oder mehrere Fernsteuer-Fahrsimulations-Programme, welche jeweils für bestimmte Typen von Kraftfahrzeugen 1 vorgesehen oder maßgeschneidert sein können, und kommuniziert mit einer Fernsteuerbefehls-Schnittstelle 31, die es der Operator-Person 14 ermöglicht, das Kraftfahrzeug 1 fernzuüberwachen bzw. fernzusteuern. Möglicherweise reicht es in einer Basis-Programmversion aus, das Kraftfahrzeug 1 ebenso wie bei vielen heutigen Videospielen mittels Maus, Tastatur bzw. irgendeinem Joystick zu steuern. Optimal wäre eine Kraftfahrzeug-Cockpitnachbildung mit Aktuatoren, die ein Lenkrad, Fahrpedale und eventuell eine Gangschaltung nachbilden und die eine sehr realitätsnahe Fernsteuerung des entfernten Kraftfahrzeug 1 erlauben würden, was der Operator-Person 14 das Gefühl gäbe, selbst in dem Kraftfahrzeug 1 zu sitzen. Derartige interaktive und haptische Kraftfahrzeug-Cockpitnachbildungen gibt es heute schon für Kraftfahrzeug-Videospieler.

Befehle, welche die Operator-Person 14 in die Fernsteuerbefehls-Schnittstelle 31 eingegeben hat, werden in einem Fernsteuerbefehlscodierer 32 in ein geeignetes Format gebracht und dann über das Funkkommunikationsmodul 24 der zentralen Koordinationseinheit 13 und über die Funkkommunikation 23 zurück an das Funckommunikationsmodul 22 des Kraftfahrzeugs 1 gesendet.

Die Überwachung der Fahrtüchtigkeit und die Ermittlung von Präferenzen des Fahrers 3 wird nun anhand von Fig. 3 näher erläutert.

Das Fahrtüchtigkeits-Bewertungsmodul 4 bewertet die gesundheitliche oder emotionale Verfassung des Fahrers 3 durch Analyse der Signale von Sensoren 33, die den Fahrer 3 überwachen, z.B. Kamera, Mikrofon, Sitzsensor usw.

Das Fahrtüchtigkeits-Bewertungsmodul 4 hat zum einen den Zweck, zu überwachen, ob der Fahrer 3 auf eine Weise abgelenkt oder geistesabwesend ist, dass er das Kraftfahrzeug 1 nicht sicher steuern kann. Zum Beispiel wird überwacht, ob der Fahrer ermüdet, einen Telefonanruf tätigt, aus irgendeinem Grund Schmerzen oder ein Gesundheitsproblem bekommt, usw.

Das Fahrtüchtigkeits-Bewertungsmodul 4 hat zum anderen den Zweck, zu schätzen, in welchen Fahrsituationen und mit welchen Fahrzeugeinstellungen sich der Fahrer 3 gut und souverän fühlt. Dies kann für eine Vorauswahl von zu dem Fahrer 3 passenden Operator-Personen 14 verwendet werden. Zum Beispiel, wenn ein Fahrer 3 einen eher sanften Fahrstil mag, passen zu ihm Operator-Personen 14 mit einem konservativen Fahrstil.

Das Wohlbefinden und die Zuversicht des Fahrers 3 können durch Analyse von Informationen wie z.B. Kamerabildern und Geräuschen des Fahrers 3 gemessen werden, die mittels der Sensoren 33 gewonnen werden, z.B. zum Beispiel durch Analyse des Gesichtsausdruck, des Augenausdrucks, des Herzschlags, des Atemrhythmus, der Stimme usw.

Die im Fahrtüchtigkeits-Bewertungsmodul 4 erhaltenen Ergebnisse werden einem Fahrerpräferenz-Gewinnungsmodul 34 zugeführt, welches außerdem Zustandsdaten vom Fahrzeugzustandsmodul 11 empfängt. Aus Zustandsdaten wie z.B. Fahrzeugbeschleunigung, Fahrzeuggeschwindigkeit, bevorzugter Rundfunksender, bevorzugte Temperatureinstellungen usw. gewinnt das Fahrerpräferenz-Gewinnungsmodul 34 charakteristische Fahrsituationsmuster.

Das Fahrerpräferenz-Gewinnungsmodul 34 korreliert dann das aktuelle Befinden des Fahrers 3 mit bestimmten Fahrsituationen und Fahrzeugzuständen. Mittels kontinuierlicher Korellationsanalyse kann das Fahrerpräferenz-Gewinnungsmodul 34 mit der Zeit bestimmte Präferenzen des Fahrers 3 identifizieren und im Fahrerpräferenzenspeicher 7 speichern. Der Fahrerpräferenzenspeicher 7 kann sich im Kraftfahrzeug 1 oder an einem entfernten Ort auf einem Server befinden. Im letzteren Fall ist eine Funkverbindung zwischen dem Fahrerpräferenzenspeicher 7, dem Fahrzeugzustandsmodul 11 und dem Fahrerpräferenz-Gewinnungsmodul 34 erforderlich.

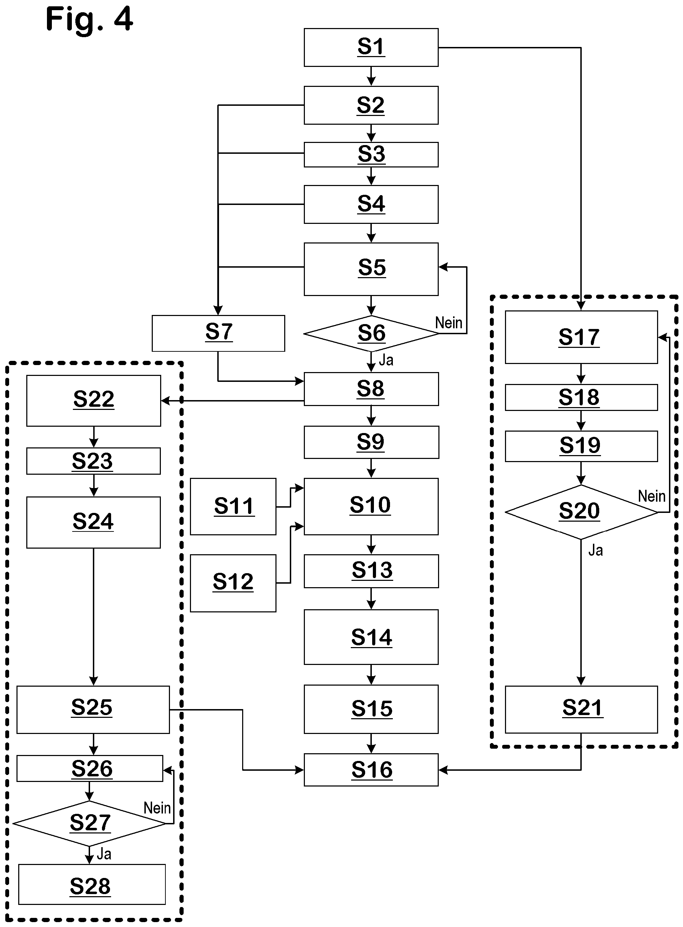

Das Flussdiagramm von Fig. 4 veranschaulicht das Arbeitsprinzip einer Anforderung von Fernüberwachung bzw. Fernsteuerung, entweder manuell durch den Fahrer 3 eines Kraftfahrzeug 1 oder durch das Fahrtüchtigkeits-Bewertungsmodul 4, das feststellt, dass der Fahrer 3 zu abgelenkt oder geistesabwesend ist, um das Kraftfahrzeug 1 sicher zu steuern, z.B., weil er eingeschlafen ist.

Im Schritt S1 ist der im Kraftfahrzeug befindliche Teil des Fernüberwachungs- und Fernsteuerungssystems ausgeschaltet und kann im Schritt S2 vom Fahrer eingeschaltet werden. Nach dem Einschalten wird im Schritt S3 eine Überwachung des Fahrers durchgeführt und werden im Schritt S4 Fähigkeiten und Präferenzen des Fahrers ermittelt bzw. aktualisiert und gespeichert, wie oben beschrieben.

Im Schritt S5 wird der Grad der Ablenkung bzw. Geistesabwesenheit des Fahrers überwacht, z.B. Stress, Ermüdung oder vorübergehende Unfähigkeit, das Kraftfahrzeug zu steuern. Im Schritt S6 wird geprüft, ob der Grad der Ablenkung bzw. Geistesabwesenheit des Fahrers kritisch ist. Wenn das Ergebnis der Prüfung Nein ist, wird der Schritt S5 wiederholt.

Wenn das Ergebnis der Prüfung im Schritt S6 Ja ist, oder wenn während irgendeines der Schritte S2-S5 der Fahrer selbst eine Fernüberwachung bzw. Fernsteuerung angefordert hat (Schritt S7), beginnt im Schritt S8 ein Prozess zum Auswählen eines Operators aus einer Vielzahl von Operator-Personen, die sich an entfernten Orten befinden.

Dazu werden im Schritt S9 die gespeicherten Fähigkeiten und Präferenzen wie z.B. Fahrstile, Ortskenntnisse usw. der gerade einsatzfähigen Operator-Personen erfasst und im Schritt S10 auf Übereinstimmungen mit den im Fahrtüchtigkeits-Bewertungsmodul 4 erhaltenen Ergebnissen geprüft, um eine Vorauswahl von Operator-Personen zu treffen. Alternativ oder zusätzlich kann die Vorauswahl anhand von im Schritt S11 erhaltenen Präferenzen des Fahrers wie z.B. Hobbies oder bestimmte Personen wie z.B. Freunde, Eltern oder Bekannte, denen erlaubt wird, das Kraftfahrzeug fernzuüberwachen oder fernzusteuern, getroffen werden. Alternativ oder zusätzlich kann die Vorauswahl anhand von im Schritt S12 erhaltenen Fähigkeiten des Fahrers wie z.B. bevorzugter Fahrstil getroffen werden.

An alle vorausgewählten Operator-Personen wird im Schritt S10 eine Anfrage zur Übernahme von Fernüberwachung bzw. Fernsteuerung gesendet, welche Anfrage von jeder Operator-Person bestätigt oder abgelehnt werden kann. Operator-Personen, die innerhalb eines Zeitlimits bestätigen, dass sie für Fernüberwachung bzw. Fernsteuerung zur Verfügung stehen (Schritt S13), werden dem Fahrer des Kraftfahrzeugs mitgeteilt (Schritt S14), z.B. in Form einer kurzen Liste mit Punktezahlen zur Qualifikation und/oder zu den im Schritt S10 geprüften Übereinstimmungen. Im Schritt S15 wählt der Fahrer eine der Operator-Personen aus, welche die Anfrage bestätigt haben, und im Schritt S16 wird der Operatorauswahlprozess beendet.

Ein alternativer Prozess für einen Notfall-Operator ist rechts von dem zuvor beschriebenen Prozess dargestellt (in einem gestrichelt umrandeten Kasten). Hierbei kann der im Kraftfahrzeug befindliche Teil des Fernüberwachungs- und Fernsteuerungssystems von einer dazu befugten Operator-Person aus der Ferne eingeschaltet werden, selbst wenn das System im Schritt S1 ausgeschaltet ist.

Im Schritt S17 fordert die befugte Operator-Person eine Fernüberwachung bzw. Fernsteuerung des Kraftfahrzeugs an. Nach Authentifizierung des Operators im Schritt S18 und der Plausibilitätsprüfung in Schritt S19 bezüglich aktuellem Fahrstil und Zustand des Fahrers im Kraftfahrzeug zum Erkennen einer kritische Situation, wird im Schritt S20 geprüft, ob eine kritische Situation erkannt worden ist. Wenn nein, geht es zum Schritt S17 zurück. Wenn ja, wird befugte Operator-Person im Schritt S21 automatisch als Operator ausgewählt, und im Schritt S16 wird der Operatorauswahlprozess beendet. Dieser alternative Prozess ermöglicht es bestimmten Personen, zum Beispiel den Eltern von jugendlichen Fahranfängern, welche besonders bei Müdigkeit oder unter Alkoholeinfluss oft zu einer riskanten Fahrweise neigen, ihrem Kind die Kontrolle über das Kraftfahrzeug zu entziehen und sie statt dessen selbst zu übernehmen.

Noch ein alternativer Prozess zur Auswahl eines Operators ist links von dem zuvor beschriebenen Prozess dargestellt (in einem gestrichelt umrandeten Kasten). Dieser Prozess kann durchgeführt werden, wenn der Fahrer des Kraftfahrzeugs zustimmt, die Fernüberwachung bzw. Fernsteuerung nicht einer Person zu übergeben, sondern einem Fahragent-Programm 15, wie weiter oben unter Bezugnahme auf Fig. 1 beschrieben.

Diese Zustimmung kann der Fahrer z.B. im obigen Schritt S8 geben, woraufhin der Prozess mit dem Schritt S22 weitergeht, in dem der Prozess zur Auswahl eines Fahragent-Programms als Operator beginnt. Im Schritt S23 wird der Standort des Kraftfahrzeugs ermittelt, z.B. als GPS-Koordinaten durch Satellitennavigation. Im Schritt S24 wird ein dem geografischen Gebiet, in dem sich das Kraftfahrzeug befindet, zugeordnetes Fahragent-Programm ermittelt. Im Schritt S25 wird dieses Fahragent-Programm als Operator ausgewählt, und im Schritt S16 wird der Operatorauswahlprozess beendet.

Im Schritt S26 wird der Standort des Kraftfahrzeugs weiter überwacht, und falls im Schritt S27 festgestellt wird, dass sich der Standort des Kraftfahrzeugs in einem geografischen Gebiet befindet, dem ein anderes Fahragent-Programm zugeordnet ist, wird im Schritt S28 die Kontrolle über das Kraftfahrzeug an das neue Fahragent-Programm übergeben. Die jeweils für ein bestimmtes geografisches Gebiet zuständigen Fahragent-Programme können für bestimmte Routen optimiert sein, und wenn es für ein bestimmtes geografisches Gebiet mehrere zuständige Fahragent-Programme gibt, können diese Informationen miteinander austauschen, um Synergien zu erzielen.

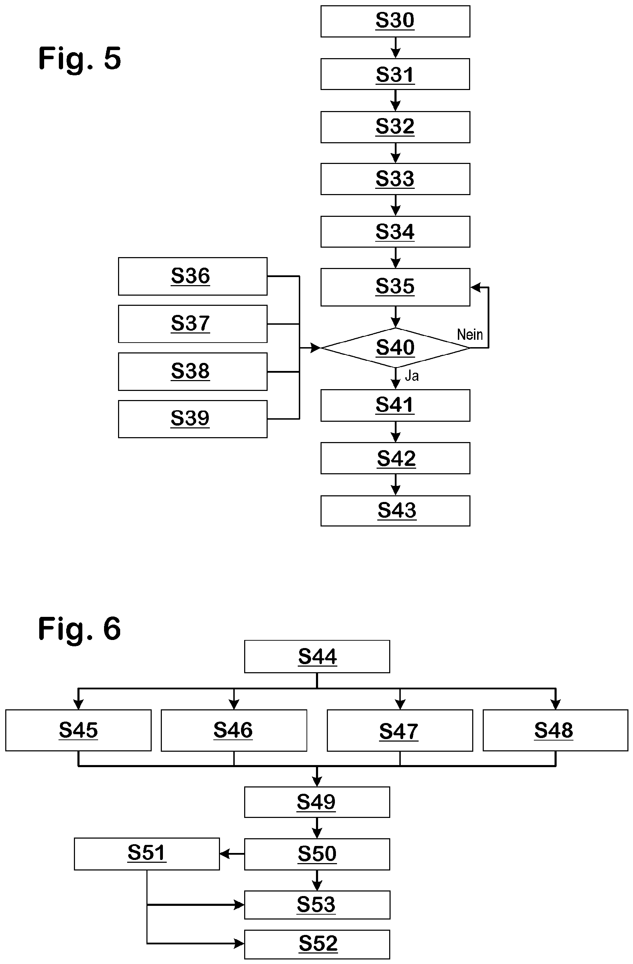

Fig. 5 zeigt ein Flussdiagramm zur Erläuterung eines Beispiels für einen Prozess zur nahtlosen Übergabe der Fahrzeugsteuerung von einem Fahrer eines Kraftfahrzeugs an einen ausgewählten Operator und zur Beendigung des ferngesteuerten Fahrbetriebs. Besonders während der Übergabe, aber auch während der Fernsteuerung selbst muss die Datenkommunikationsverbindung zwischen dem entfernten Operator und dem Kraftfahrzeug bzw. dessen Steuerungs- und Kontrolleinrichtungen zuverlässig sein. Um sicherzustellen, dass die Verbindung kontinuierlich zur Verfügung steht, kann man redundante Funkverbindungen vorsehen, z.B. zwei parallele Funkverbindungen.

Der in Fig. 5 gezeigte Prozess schließt sich an den Schritt S16 des Operatorauswahlprozesses von Fig. 4 an. Nach dem Schritt S16 wird im Schritt S30 die Übergabe der Fahrzeugsteuerung auf Fernsteuerung durch den ausgewählten Operator vorbereitet, und im Schritt S31 wird eine zuverlässige Funkverbindung sichergestellt. Im Schritt S32 wird auf Fernsteuerung durch den Operator umgeschaltet, und der Fahrer wird davon in Kenntnis gesetzt. Während der Übergabe können vorübergehend geeignete Fahrerassistenzsysteme wie z.B. Spurhalteassistent, Abstandsregeltempomat usw. aktiviert werden, welche das Kraftfahrzeug gleichmäßig und kontinuierlich in Bewegung halten. Die Übergabe der Fahrzeugsteuerung auf Fernsteuerung ist damit beendet (Schritt S33), und in der Folge steuert allein der Operator das Kraftfahrzeug (Schritt S34).

Um den ferngesteuerten Fahrbetrieb beenden zu können, wenn dies erforderlich wird, wird im Schritt S35 laufend überwacht, ob es eine Anforderung zur Beendigung des ferngesteuerten Fahrbetriebs gibt. Es kann sein, dass der ferngesteuerte Fahrbetrieb ein geplantes zeitliches oder räumliches Ende erreicht hat (Schritt S36), z.B. eine gebuchte Fahrzeit oder Fahrstrecke oder ein Fahrziel. Es kann auch sein, dass der Fahrer aus irgendeinem Grund die Kontrolle über sein Kraftfahrzeug zurückerhalten möchte (Schritt S37). Es kann auch sein, dass der Operator aus irgendeinem Grund die Kontrolle über das Kraftfahrzeug zurückgeben möchte (Schritt S38). Es kann auch sein, dass irgendeine Notfallsituation auftritt (Schritt S39), z.B. falls die Kommunikationsverbindung wegen einer Fehlfunktion der Hardware oder Überlastung beeinträchtigt ist oder falls es irgendeinen Fehlerzustand im Kraftfahrzeug gibt, wie z.B. Motorversagen, Getriebeversagen, Radschaden, Kraftstoffmangel usw. In derartigen Fällen wird es voraussichtlich besser sein, wenn der Fahrer die Kontrolle über das Kraftfahrzeug zurückerhält.

Solange im Schritt S40 festgestellt wird, dass keine Anforderung zur Beendigung des ferngesteuerten Fahrbetriebs vorliegt, werden die Schritte S35 und S40 wiederholt durchgeführt. Wird im Schritt S40 festgestellt, dass eine Anforderung zur Beendigung des ferngesteuerten Fahrbetriebs vorliegt, wird im Schritt S41 der (inaktive) Fahrer des Kraftfahrzeugs alarmiert, wobei die Art oder Intensität des Alarms von dem Grund für die Beendigung abhängen kann. Je kritischer der Grund für die Beendigung des ferngesteuerten Fahrbetriebs, desto intensiver der Alarm. Im Schritt S42 können vorübergehend Fahrerassistenzsysteme wie z.B. Spurhalteassistent, Abstandsregeltempomat usw. aktiviert werden, um das Kraftfahrzeug gleichmäßig in Bewegung zu halten. Im Schritt S43 ist der ferngesteuerte Fahrbetrieb beendet, und der Fahrer des Kraftfahrzeugs hat wieder die volle und alleinige Kontrolle über sein Fahrzeug.

Fig. 6 zeigt einen Prozess zur Bewertung von Operator-Personen 14 mittels des Operatorbewertungsmoduls 9 und zur Abrechnung von Fernsteuerungsdiensten mittels des Abrechnungsmoduls 12.

Nach dem Start einer Fernüberwachungs- und Fernsteuerungssitzung im Schritt S44 werden gleichzeitig mehrere Kriterien zur Bewertung der das Kraftfahrzeug fernsteuernden Operator-Person überwacht, nämlich im Schritt S45 die Einhaltung von Verkehrsregeln, im Schritt S46 die Güte des Fahrstils, im Schritt 47 die Einhaltung von Präferenzen des (inaktiven) Fahrers des Kraftfahrzeugs und dessen Anforderungen an die Operator-Person (z.B. dass sich diese während der Sitzung ausschließlich mit dem Führen des Kraftfahrzeugs befassen soll, nicht über 120 km/h fahren soll, u. dgl.), und im Schritt S48 die emotionale und gesundheitliche Verfassung der Operator-Person und/oder der Grad der Aufmerksamkeit, die der Operator seiner Aufgabe gewidmet hat.

All diese Kriterien werden während des ferngesteuerten Fahrens beobachtet (Schritt 49). Nachdem im Schritt S50 eine Fernüberwachungs- und Fernsteuerungssitzung geendet hat, wird anhand dieser Kriterien im Schritt S51 ein Maß zur Bewertung der Operator-Person berechnet, und anhand dieses Maßes wird ein gespeichertes Operator-Profil aktualisiert (Schritt S52). Das Maß zur Bewertung der Operator-Person kann auch Einfluss auf die Abrechnung im Schritt S53 haben, die nach Beendigung der Überwachungs- und Steuerungssitzung durchgeführt wird.

Das Fernüberwachungs- und Fernsteuerungssystem ist als ein nach Inanspruchnahme abgerechneter Bezahldienst ausgelegt, der von Operator-Personen, die über gewisse Fähigkeiten verfügen, auf einer freiwilligen Basis durchgeführt werden kann, ähnlich wie es Taxifahrer tun. Daher bezahlt der Fahrer, der sich von einer Operator-Person überwachen oder chauffieren lässt, einen entsprechenden Betrag, der dann abzüglich eines angemessenen Anteils für die Systembetreiber und Zahlungsabwickler der Operator-Person zukommen gelassen wird. Die Abrechnung kann nach irgendeinem bekannten Verfahren stattfinden, z.B. Kreditkartenleser im Kraftfahrzeug, Internet-Abrechnung usw. Der Endpreis könnte vermindert werden, wenn die Bewertung der Operator-Person ergibt, dass diese ihrer Verantwortung nicht gerecht geworden ist, z.B. zu müde war, auch mit anderem als Fernüberwachung bzw. Fernsteuerung befasst war, zu schnell gefahren ist, zu ruckartig gefahren ist, usw.

Dem Fachmann ist klar, dass die beschriebenen Ausführungsbeispiele auf mannigfache Weise variiert oder miteinander kombiniert werden können.

## Patentansprüche

1. Fernsteuerungssystem und/oder Fernüberwachungssystem für Kraftfahrzeuge (1) über eine Funk-Datenkommunikationsverbindung, mit
einer Zentrale (13),
einem oder mehreren fernüberwachbaren und/oder fernsteuerbaren Kraftfahrzeugen (1),
**dadurch gekennzeichnet, dass**
das Fernsteuerungssystem und/oder Fernüberwachungssystem fern von der Zentrale (13) befindliche persönliche Datenendgeräte (14a) umfasst, wobei die Zentrale (13) dafür eingerichtet ist, Anforderungen von Fernüberwachung und/oder Fernsteuerung eines Kraftfahrzeugs (1) und Angebote zur Durchführung der Fernsteuerung des Kraftfahrzeugs (1) von den fern von der Zentrale (13) befindlichen persönlichen Datenendgeräten (14a) aus zu vermitteln und nach Annahme eines Angebots eine Datenkommunikationsverbindung zwischen dem Kraftfahrzeug (1) und dem persönlichen Datenendgerät (14a), von dem das angenommene Angebot stammt, bereitzustellen, und wobei
jedes persönliche Datenendgerät (14a) dafür eingerichtet ist, die Fernüberwachung und/oder Fernsteuerung des Kraftfahrzeugs (1) über die bereitgestellte Datenkommunikationsverbindung nach Art von Fahrsimulations-Computerspielen durchzuführen, nämlich mit einer Bildschirmansicht des Kraftfahrzeug-Armaturenbretts und der realen Szenerie in Fahrtrichtung und in den Rückspiegeln.

2. Fernsteuerungssystem und/oder Fernüberwachungssystem nach Anspruch 1,
**dadurch gekennzeichnet, dass**
jedes Kraftfahrzeug (1) Drive-by-Wire-Steuereinrichtungen, die eine Steuerung des Kraftfahrzeugs (1) mittels elektrischer Signale ermöglichen, und eine Datenverarbeitungseinrichtung enthält, in dem eine von der Zentrale (13) bereitgestellte oder autorisierte Software zur Übermittlung von Anforderungen von Fernüberwachung und/oder Fernsteuerung an die Zentrale (13) und zur Durchführung der Fernsteuerung von einem entfernten persönlichen Datenendgerät (14a) aus installiert ist.

3. Fernsteuerungssystem und/oder Fernüberwachungssystem nach Anspruch 1 oder 2,
**dadurch gekennzeichnet, dass**
jedes persönliche Datenendgerät (14a) ein Allzweck-Computer für Endverbraucher ist, insbesondere ein PC mit Bildschirm und Eingabegeräten ist, auf dem eine von der Zentrale bereitgestellte oder autorisierte Software zum Empfang von Anforderungen von Fernüberwachung und/oder Fernsteuerung von der Zentrale (13), zur Übermittlung von Angeboten zur Fernüberwachung und/oder Fernsteuerung an die Zentrale (13), sowie zur Durchführung der Fernüberwachung und/oder Fernsteuerung installiert ist.

4. Fernsteuerungssystem und/oder Fernüberwachungssystem nach einem der vorhergehenden Ansprüche,
**dadurch gekennzeichnet, dass**
eine Fernüberwachung und/oder Fernsteuerung von Operator-Personen (14) durchgeführt wird.

5. Fernsteuerungssystem und/oder Fernüberwachungssystem nach Anspruch 4,
**dadurch gekennzeichnet, dass**
eine Fernüberwachung und/oder Fernsteuerung wahlweise auch von Fahragent-Programmen (15) durchgeführt wird.

6. Fernsteuerungssystem und/oder Fernüberwachungssystem nach einem der vorhergehenden Ansprüche,
**dadurch gekennzeichnet, dass**
die Fernsteuerung eine Fernsteuerung von Longitudinal- und Lateralgeschwindigkeiten und -beschleunigungen des Kraftfahrzeugs (1) umfasst oder darin besteht.

7. Fernsteuerungssystem und/oder Fernüberwachungssystem nach einem der vorhergehenden Ansprüche,
**dadurch gekennzeichnet, dass**
das Fernsteuerungssystem ein Bezahlsystem (12) für automatische Abwicklung der Zahlung von Dienstnutzung und der Entlohnung von Operator-Personen (14) umfasst.

8. Fernsteuerungssystem und/oder Fernüberwachungssystem nach einem der vorhergehenden Ansprüche,
**dadurch gekennzeichnet, dass**
das Fernsteuerungssystem eine im Kraftfahrzeug (1) installierte Einrichtung (4) zur automatischen Überwachung und Bewertung der gesundheitlichen oder emotionalen Verfassung des Fahrers (3) umfasst, welche dafür eingerichtet ist, ggf. eine Anforderung von Fernsteuerung des Kraftfahrzeugs (1) an die Zentrale (13) zu senden.

9. Fernsteuerungssystem und/oder Fernüberwachungssystem nach einem der vorhergehenden Ansprüche,
**dadurch gekennzeichnet, dass**
das Fernsteuerungssystem eine Einrichtung (9) zur automatischen Bewertung der Leistung von Operator-Personen (14), welche Leistung in eine Entlohnung der Operator-Personen (14) einfließen kann, und/oder zur Überwachung der emotionalen und gesundheitlichen Verfassung von Operator-Personen (14) umfasst.

10. Fernsteuerungssystem und/oder Fernüberwachungssystem nach einem der vorhergehenden Ansprüche,
**dadurch gekennzeichnet, dass**
ein Auswahlprozeß von Operator-Personen mittels eines Operator-Auswahlmoduls (6) aufgrund eines oder mehrerer der Kriterien
- Übereinstimmungen mit dem Fahrer wie Bekanntschaften, Fahrstil und/oder persönliche Einstellungen;
- Vorauswahl des Fahrers, insbesondere aufgrund von Namenslisten, Anforderungsprofil des Operators und/oder Mindestanforderungen an den Operator
durchgeführt wird.

11. Fernsteuerungssystem und/oder Fernüberwachungssystem nach einem der vorhergehenden Ansprüche,
**dadurch gekennzeichnet, dass**
die Datenkommunikationsverbindung zwischen dem Kraftfahrzeug (1) und dem persönlichen Datenendgerät (14a) redundant ist und insbesondere zwei parallele Funkverbindungen umfasst.

## Claims

1. Remote control system and/or remote monitoring system for motor vehicles (1) via a radio data communication link, with
a central station (13),
one or more remotely monitorable and/or remotely controllable motor vehicles motor vehicles (1) **characterized in that**
the remote control system and/or remote monitoring system comprises personal data terminals (14a) located remotely from the central station (13), wherein the central station (13) is configured for conveying requests for remote monitoring and/or remote control of a motor vehicle (1) and offers for performing the remote control of the motor vehicle (1) from the personal data terminals (14a) located remotely from the central station (13) and after acceptance of an offer providing a data communication link between the motor vehicle (1) and the personal data terminal (14a) from which the accepted offer originates, and wherein
each personal data terminal (14a) is configured for performing the remote monitoring and/or remote control of the motor vehicle (1) via the data communication link provided in the manner of drive simulation computer games, namely with a screen view of the motor vehicle dashboard and the actual scenery in the direction of driving and in the rear view mirrors.

2. Remote control system and/or remote monitoring system according to Claim 1,
**characterized in that**
each motor vehicle (1) contains drive-by-wire control devices which provide for control of the motor vehicle (1) by means of electrical signals, and a data processing device in which software provided or authorized by the central station (13) for conveying requests for remote monitoring and/or remote control to the central station (13) and for performing the remote control from a remote personal data terminal (14a) is installed.

3. Remote control system and/or remote monitoring system according to Claim 1 or 2,
**characterized in that**
each personal data terminal (14a) is an all-purpose computer for end users, especially is a PC with screen and input devices, on which software, provided or authorized by the central station, for receiving requests for remote monitoring and/or remote control from the central station (13), for conveying offers for remote monitoring and/or remote control to the central station (13) and for performing the remote monitoring and/or remote control is installed.

4. Remote control system and/or remote monitoring system according to one of the preceding claims,
**characterized in that**
remote monitoring and/or remote control is performed by operator persons (14).

5. Remote control system and/or remote monitoring system according to Claim 4,
**characterized in that**
remote monitoring and/or remote control is performed optionally also by driving agent programs (15) .

6. Remote control system and/or remote monitoring system according to one of the preceding claims,
**characterized in that**
the remote control comprises or consists in a remote control of longitudinal and lateral speeds and accelerations of the motor vehicle (1).

7. Remote control system and/or remote monitoring system according to one of the preceding claims,
**characterized in that**
the remote control system comprises a payment system (12) for automatically handling the payment for utilizing services and the payment of operator persons (14).

8. Remote control system and/or remote monitoring system according to one of the preceding claims,
**characterized in that**
the remote control system comprises a device (4), installed in the motor vehicle (1), for automatically monitoring and evaluating the health-related or emotional constitution of the driver (3) which is configured for possibly sendng a request for remote control of the motor vehicle (1) to the central station (13).

9. Remote control system and/or remote monitoring system according to one of the preceding claims,
**characterized in that**
the remote control system comprises a device (9) for automatically evaluating the performance of operator persons (14), which performance can be included in a payment of the operator persons (14), and/or for monitoring the emotional and health-related constitution of operator persons (14).

10. Remote control system and/or remote monitoring system according to one of the preceding claims,
**characterized in that**
a selection process of operator persons is performed by means of an operator selection module (6) on the basis of one or more of the criteria of
- correspondences with the driver such as acquaintances, driving style and/or personal attitudes;
- preselection of the driver, especially on the basis of lists of names, requirement profile of the operator and/or minimum requirements for the operator.

11. Remote control system and/or remote monitoring system according to one of the preceding claims,
**characterized in that**
the data communication link between the motor vehicle (1) and the personal data terminal (14a) is redundant and especially comprises two parallel radio links.

## Revendications

1. Système de commande à distance et/ou système de surveillance à distance pour véhicules automobiles (1) par l'intermédiaire d'une liaison de radiocommunication de données, comprenant
une centrale (13),
un ou plusieurs véhicules automobiles (1) qui peuvent être surveillés à distance et/ou commandés à distance,
**caractérisé en ce que** le système de commande à distance et/ou le système de surveillance à distance comprend des terminaux de données personnels (14a) situés à distance de la centrale (13),
dans lequel la centrale (13) est conçue pour transmettre des demandes de surveillance à distance et/ou de commande à distance d'un véhicule automobile (1) et des propositions d'exécution de la commande à distance du véhicule automobile (1) depuis les terminaux de données personnels (14a) situés à distance de la centrale (13) et, après acceptation d'une proposition, pour fournir une liaison de communication de données entre le véhicule automobile (1) et le terminal de données personnel (14a) dont émane la proposition acceptée, et dans lequel chaque terminal de données personnel (14a) est conçu pour effectuer une surveillance à distance et/ou une commande à distance du véhicule automobile (1) par l'intermédiaire de la liaison de communication de données fournie à la manière de jeux de simulation de conduite sur ordinateur, notamment avec une vue sur écran du tableau de bord du véhicule automobile et du paysage réel dans la direction de conduite et dans les rétroviseurs.

2. Système de commande à distance et/ou système de surveillance à distance selon la revendication 1, **caractérisé en ce que** chaque véhicule automobile (1) comprend un dispositif de commande électrique de conduite permettant de commander le véhicule automobile (1) au moyen de signaux électriques, et un dispositif de traitement de données sur lequel est installé un logiciel fourni ou autorisé par la centrale (13) pour transmettre à la centrale (13) des demandes de surveillance à distance et/ou des demandes de commande à distance et pour effectuer la commande à distance depuis un terminal de données personnel (14a) distant.

3. Système de commande à distance et/ou système de surveillance à distance selon la revendication 1 ou 2, **caractérisé en ce que** chaque terminal de données personnel (14a) est un ordinateur polyvalent pour utilisateurs finaux, notamment un PC comportant un écran et des dispositifs de saisie, sur lequel est installé un logiciel fourni ou autorisé par la centrale pour recevoir des demandes de surveillance à distance et/ou de commande à distance de la centrale (13), pour transmettre à la centrale (13) des propositions de surveillance à distance et/ou de commande à distance et pour effectuer la surveillance à distance et/ou la commande à distance.

4. Système de commande à distance et/ou système de surveillance à distance selon l'une des revendications précédentes,
**caractérisé en ce qu'**une surveillance à distance et/ou la commande à distance est effectuée par des personnels opérateurs (14).

5. Système de commande à distance et/ou système de surveillance à distance selon la revendication 4, **caractérisé en ce qu'**une surveillance à distance et/ou une commande à distance est également facultativement effectuée par des programmes d'agent de conduite (15).

6. Système de commande à distance et/ou système de surveillance à distance selon l'une des revendications précédentes,
**caractérisé en ce que** la commande à distance comprend ou consiste en une commande à distance des vitesses et accélérations longitudinales et latérales du véhicule automobile (1).

7. Système de commande à distance et/ou système de surveillance à distance selon l'une des revendications précédentes,
**caractérisé en ce que** le système de commande à distance comprend un système de paiement (12) destiné à traiter automatiquement le paiement de services utilisés et la rémunération de personnels opérateurs (14).

8. Système de commande à distance et/ou système de surveillance à distance selon l'une des revendications précédentes,
**caractérisé en ce que** le système de commande à distance comprend un dispositif (4) installé dans le véhicule automobile (1) pour surveiller et évaluer automatiquement la santé ou l'état émotionnel du conducteur (3), lequel est conçu pour envoyer si nécessaire à la centrale (13) une demande de commande à distance du véhicule automobile (1) .

9. Système de commande à distance et/ou système de surveillance à distance selon l'une des revendications précédentes,
**caractérisé en ce que** le système de commande à distance comprend un dispositif (9) d'évaluation automatique des performances des personnels opérateurs (14), lesquelles performances peuvent être intégrées dans une rémunération des personnels opérateurs (14), et/ou pour surveiller l'état de santé et l'état émotionnel des personnels opérateurs (14).

10. Système de commande à distance et/ou système de surveillance à distance selon l'une des revendications précédentes,
**caractérisé en ce qu'**un processus de sélection des personnels opérateurs est effectué au moyen d'un module de sélection des personnels opérateurs (6) sur la base d'un ou de plusieurs des critères suivants
- des ressemblances avec le conducteur, comme par exemple leurs connaissances, le style de conduite et/ou les réglages personnels ;
- la présélection du conducteur, notamment sur la base de listes de noms, du profil de demandes de l'opérateur et/ou des demandes minimales fournies à l'opérateur.

11. Système de commande à distance et/ou système de surveillance à distance selon l'une des revendications précédentes,
**caractérisé en ce que** la liaison de transmission de données entre le véhicule automobile (1) et le terminal de données personnel (14a) est redondante et comprend en particulier deux liaisons radio parallèles.
